# EUROPEAN PATENT APPLICATION

(11) **EP 2 811 127 A1**
(43) Date of publication of application: **10.12.2014**
(21) Application number: 12867444.7
(22) Date of filing: 30.01.2012
(51) Int. Cl.: F01M 13/00, F01M 13/02

(54) **BLOW-BY GAS RECIRCULATION DEVICE FOR INTERNAL COMBUSTION ENGINE**

(71) Applicant: Toyota Jidosha Kabushiki Kaisha, Toyota-shi, Aichi 471-8571 (JP)
(72) Inventor: IKEDA, Jun, Toyota-shi, Aichi-ken, 471-8571 (JP)
(74) Representative: TBK
(86) International application number: PCT/JP2012/052002
(87) International publication number: WO 2013/114537

(57) **Abstract**

Through the action of a turbocharger (10), if the pressure of the section of the air intake path (3) of an internal combustion engine (1) that is on the downstream side of a compressor wheel (12) becomes higher than the pressure of the section on the upstream side, a flow of air is produced in a bypass pipe (19) and an ejector (20) draws in blow-by gas from within a first gas pipe (21). As a result, the blow-by gas sucked into the ejector (20) from the first gas pipe (21) flows into the section of the air intake path (3) on the upstream side of the compressor wheel (12) by way of the bypass pipe (19). The blow-by gas recirculation device has a structure in which the section of at least the bypass pipe (19) or the first gas pipe (21) that connects to the other components separates at the same time the other piping located in the vicinity of the internal combustion engine (1) separates. The other piping is piping that will affect a monitorable engine operation state when separated.

## Description

### TECHNICAL FIELD

The present invention relates to a blow-by gas recirculation device for an internal combustion engine.

### BACKGROUND ART

A device disclosed in, for example, Patent Document 1 has been proposed as a blow-by gas recirculation device, which recirculates blow-by gas that has flowed out of combustion chambers of an internal combustion engine equipped with a forced-induction device to the intake passage of the engine. In the blow-by gas recirculation device, an ejector is provided in a bypass pipe that connects a section in the intake passage of the internal combustion engine upstream of the forced-induction device and a section downstream of the forced-induction device. A gas pipe to which the blow-by gas that has flowed out of the combustion chambers of the engine flows is connected to the ejector. When the pressure in the intake passage downstream of the forced-induction device becomes higher than the pressure in the intake passage upstream of the forced-induction device through operation of the forced-induction device, flow of air occurs in the bypass pipe from downstream of the forced-induction device to upstream of the forced-induction device due to the pressure difference. When such flow of air occurs in the bypass pipe, the ejector draws in the blow-by gas in the gas pipe and causes it to flow to the section in the intake passage upstream of the forced-induction device via the bypass pipe.

### PRIOR ART DOCUMENTS

### Patent Documents

Patent Document 1: Japanese Laid-Open Patent Publication No. 2009-299645

### SUMMARY OF THE INVENTION

### Problems that the Invention is to Solve

In the above-mentioned blow-by gas recirculation device, if a connection portion of at least one of the bypass pipe and the gas pipe is detached (escapes) from a connected component, the blow-by gas is discharged to the atmosphere from the detached portion. To address this problem, detachment of the connection portion of at least one of the bypass pipe and the gas pipe from the connected component is desirably detected at an early stage after the occurrence of detachment. If detachment of the connection portion of at least one of the bypass pipe and the gas pipe from the connected component occurs, since the bypass pipe is connected to the section of the intake passage upstream of the forced-induction device, the atmospheric air flows into the section of the intake passage upstream of the forced-induction device from the detached portion in addition to the above-mentioned discharge of the blow-by gas to the atmosphere. However, since the pressure in the section of the intake passage upstream of the forced-induction device is substantially equal to the atmospheric pressure, even if the atmospheric air flows in from the detached portion to the section of the intake passage upstream of the forced-induction device, the flowing-in atmospheric air is not likely to influence the operation of the internal combustion engine. Detachment therefore cannot be detected by monitoring changes in the engine operating state caused by detachment of the connection portion of at least one of the bypass pipe and the gas pipe from the connected component. Furthermore, a sensor may be additionally provided that includes a signal line that would be disconnected at detachment of the connection portion of at least one of the bypass pipe and the gas pipe from the connected component. The sensor detects detachment of the bypass pipe based on the disconnection of the signal. In this case, however, installation of the sensor is troublesome and extra cost is needed for the sensor.

Accordingly, it is an objective of the present invention to provide a blow-by gas recirculation device for an internal combustion engine that detects detachment of a connection portion of at least one of a bypass pipe and a gas pipe from a connected component without providing, for example, an additional sensor.

### Means for Solving the Problems

To achieve the above objective, in a blow-by gas recirculation device for an internal combustion engine according to the present invention, when, through operation of a forced-induction device, which is provided in an intake passage of the internal combustion engine, the pressure in the intake passage downstream of the forced-induction device becomes higher than the pressure in the intake passage upstream of the forced-induction device, flow of air occurs in the bypass pipe from downstream of the forced-induction device to upstream of the forced-induction device due to the pressure difference. When such flow of air occurs in the bypass pipe, an ejector, which is provided in the bypass pipe, draws in the blow-by gas in a gas pipe, which is connected to the ejector, that is, a gas pipe into which the blow-by gas that has flowed out of the combustion chamber of the internal combustion engine flows. Consequently, the blow-by gas that is drawn into the ejector from the gas pipe flows into the section of the intake passage upstream of the forced-induction device via the bypass pipe. In this manner, the blow-by gas that has flowed out of the combustion chamber of the internal combustion engine is recirculated to the intake passage by the blow-by gas recirculation device to be processed. The blow-by gas recirculation device is configured such that detachment of a connection portion of at least one of the bypass pipe and the gas pipe from a connected component occurs simultaneously with detachment of a different pipe located in the vicinity of the internal combustion engine. The different pipe is a pipe that would have an influence on a monitorable engine operating state if detached. Since the different pipe is simultaneously detached when the connection portion of at least one of the bypass pipe and the gas pipe is detached from the connected component, the engine operating state is changed in accordance with the detachment of the different pipe. Since changes in the engine operating state can be monitored, detachment of the different pipe, in other words, detachment of the connection portion of at least one of the bypass pipe and the gas pipe from the connected component is detected based on a change in the engine operating state. It is also unnecessary to provide an additional sensor for detecting detachment of the connection portion of at least one of the bypass pipe and the gas pipe from the connected component.

In accordance with one aspect of the present invention, the blow-by gas recirculation device includes a stop valve that operates to permit and block flow of the blow-by gas that has flowed out of the combustion chamber of the internal combustion engine toward the gas pipe. When detecting detachment of the connection portion of at least one of the bypass pipe and the gas pipe from the connected component that has occurred simultaneously with detachment of the different pipe, the blow-by gas recirculation device inhibits the flow of the blow-by gas toward the gas pipe by closing the stop valve. The blow-by gas is thus inhibited from being discharged to the atmosphere from the detached portion when the connection portion of at least one of the bypass pipe and the gas pipe is detached from the connected component.

The configuration in which detachment of the connection portion of at least one of the bypass pipe and the gas pipe from the connected component occurs simultaneously with detachment of the different pipe located in the vicinity of the internal combustion engine includes a configuration in which one of the bypass pipe and the gas pipe is mechanically coupled to the different pipe, more specifically, a configuration in which at least one of the bypass pipe and the gas pipe is integrally formed with the different pipe, and a configuration in which at least one of the bypass pipe and the gas pipe is connected to the different pipe by welding or by a bundling tool.

As the above-mentioned different pipe, a negative pressure pipe may be used that causes intake negative pressure of the internal combustion engine to act on an actuator that is driven by the intake negative pressure to adjust boost pressure of the internal combustion engine generated by the forced-induction device. In this case, the different pipe (negative pressure pipe) is detached simultaneously with detachment of the connection portion of at least one of the bypass pipe and the gas pipe from the connected component. Due to this, the intake negative pressure for driving the actuator is not properly applied to the actuator. As a result, the boost pressure of the internal combustion engine is changed as a change in the engine operating state associated with the detachment of the negative pressure pipe. This allows detection of the detachment of the negative pressure pipe, in other words, the detachment of the connection portion of at least one of the bypass pipe and the gas pipe from the connection portion based on the change in the boost pressure. Since the boost pressure of the internal combustion engine is detected by a pressure sensor for detecting the boost pressure provided in the internal combustion engine equipped with a forced-induction device, it is unnecessary to provide an additional sensor for detecting detachment of the connection portion of at least one of the bypass pipe and the gas pipe from the connected component.

According to one aspect of the present invention, the gas pipe is a first gas pipe. As the different pipe, a second gas pipe is used that allows the blow-by gas that has flowed out of the combustion chamber of the internal combustion engine to flow to the section of the intake passage downstream of the throttle valve. In this case, the different pipe (second gas pipe) is detached simultaneously with detachment of the connection portion of at least one of the bypass pipe and the gas pipe from the connected component. If the different pipe (second gas pipe) is detached as described above, the blow-by gas in the second gas pipe is not drawn into the section in the intake passage downstream of the throttle valve, and the atmospheric air is drawn in instead of the blow-by gas. As a result, the air-fuel ratio of the internal combustion engine is changed to a lean state as a change in the engine operating state associated with the detachment of the second gas pipe. Based on the change in the air-fuel ratio, the detachment of the second gas pipe, in other words, the detachment of the connection portion of at least one of the bypass pipe and the gas pipe from the connected component is detected. Since changes in the air-fuel ratio of the internal combustion engine are detected based on signals from sensors that output signals corresponding to the oxygen concentration in the exhaust gas such as an air-fuel ratio sensor and an oxygen sensor provided in the exhaust passage of the engine, it is unnecessary to provide an additional sensor for detecting detachment of the connection portion of at least one of the bypass pipe and the gas pipe from the connected component.

The above-mentioned detachment of the connection portion of at least one of the bypass pipe and the gas pipe from the connected component includes detachment of the bypass pipe from the intake passage. In this case, detachment of the bypass pipe from the intake passage is configured to occur simultaneously with that of the different pipe. The configuration in which detachment of the bypass pipe from the intake passage occurs simultaneously with detachment of the different pipe includes a configuration in which the bypass pipe is mechanically coupled to the different pipe, more specifically, a configuration in which the bypass pipe is integrally formed with the different pipe, and a configuration in which the bypass pipe and the different pipe are connected to each other by welding or by a bundling tool.

### BRIEF DESCRIPTION OF THE DRAWINGS

Fig. 1 is a schematic view illustrating an entire internal combustion engine to which a blow-by gas recirculation device of the present invention is applied;
Figs. 2(a) to 2(c) are cross-sectional views illustrating examples of configurations of the devices that allow detachment of the bypass pipe from the intake passage to occur simultaneously with detachment of the negative pressure pipe of the internal combustion engine from the intake passage; and
Fig. 3 is a flowchart showing a procedure to detect detachment of the upstream section of the bypass pipe from the intake passage or the ejector and to address the detachment.

### MODES FOR CARRYING OUT THE INVENTION

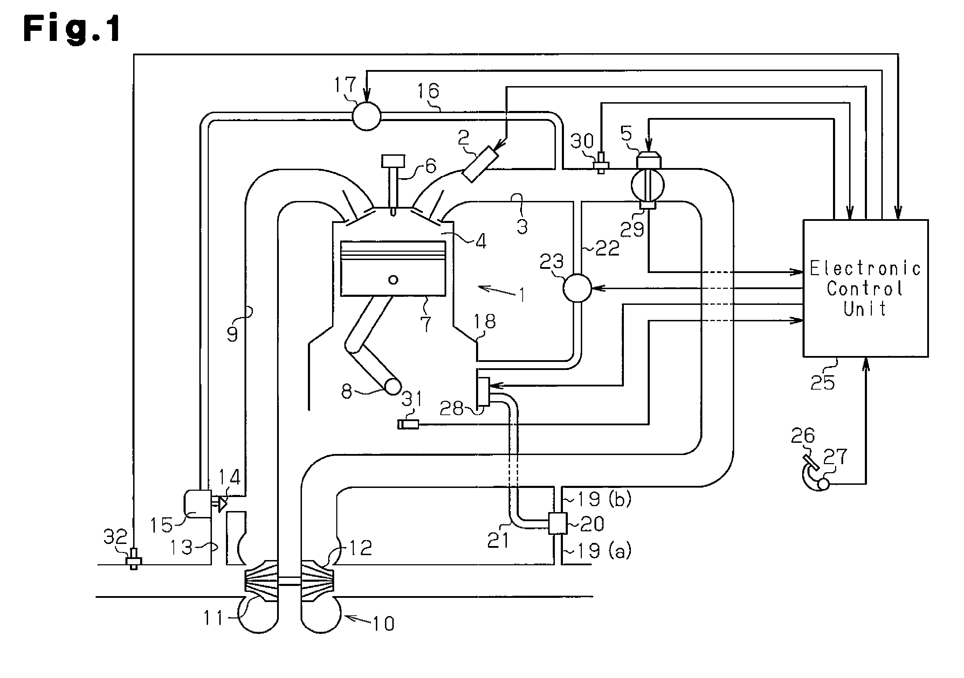

One embodiment of the present invention applied to an automotive internal combustion engine will now be described with reference to Figs. 1 to 3.

In an internal combustion engine 1 shown in Fig. 1, fuel injected from a fuel injection valve 2 is drawn into a combustion chamber 4 with air via an intake passage 3. The amount of air drawn into the combustion chamber 4 at this time is regulated by adjusting the opening degree of a throttle valve 5 provided in the intake passage 3. The amount of fuel injected from the fuel injection valve 2 is set to be an amount corresponding to the amount of air drawn into the combustion chamber 4 through the intake passage 3. When the fuel and air are drawn into the combustion chamber 4, and thus formed air-fuel mixture is ignited by an ignition plug 6 to burn the air-fuel mixture, a piston 7 reciprocates by the combustion energy so that an output shaft of the internal combustion engine 1, which is a crankshaft 8 in this embodiment, is rotated. Furthermore, the air-fuel mixture that has been burned in the combustion chamber 4 is sent to an exhaust passage 9 as exhaust gas.

A forced-induction device, which is a turbocharger 10 in this embodiment, is provided in the exhaust passage 9 and in part of the intake passage 3 upstream of the throttle valve 5. The turbocharger 10 includes a turbine wheel 11, which is rotated by the flow of exhaust gas that passes through the exhaust passage 9, and a compressor wheel 12, which rotates integrally with the turbine wheel 11 to send the air in the intake passage 3 downstream. When the compressor wheel 12 of the turbocharger 10 is rotated, the intake pressure (boost pressure) of the internal combustion engine 1 increases.

A bypass passage 13 is connected to the exhaust passage 9 to bypass the turbocharger 10 (turbine wheel 11), and a wastegate valve 14 is provided in the passage 13. The wastegate valve 14 is selectively opened and closed to vary the exhaust flow area of the passage 13. The smaller the exhaust flow area of the bypass passage 13 is made through opening and closing operation of the wastegate valve 14, the greater the flow rate of the exhaust gas that passes through the turbine wheel 11 becomes. This increases the rotational speed of the turbocharger 10, thus increasing the boost pressure of the internal combustion engine 1. The wastegate valve 14 is urged toward the fully opened position by elastic force of a spring, and is displaced in a valve opening direction against the elastic force of the spring by a negative pressure actuator 15. Since the wastegate valve 14 is selectively opened and closed to vary the exhaust flow area of the bypass passage 13 by operation of the actuator 15, the boost pressure of the internal combustion engine 1, which is varied based on the operation of the turbocharger 10, is regulated.

A negative pressure pipe 16, which is connected to the section of the intake passage 3 downstream of the throttle valve 5, is connected to the actuator 15. When the negative pressure (intake negative pressure) in the section of the intake passage 3 downstream of the throttle valve 5 acts on the actuator 15 via the negative pressure pipe 16, the actuator 15 is operated by the force based on the intake negative pressure to displace the wastegate valve 14 in a valve closing direction. A control valve 17 is provided in the negative pressure pipe 16, and is selectively opened and closed to open and shut the negative pressure pipe 16.

The internal combustion engine 1 is provided with a blow-by gas recirculation device, which recirculates the blow-by gas that has flowed out of the combustion chamber 4 into a crankcase 18 toward the intake passage 3 of the engine 1 and processes the blow-by gas.

The device includes a bypass pipe 19, which connects the section of the intake passage 3 upstream of the compressor wheel 12 (the turbocharger 10) to the section downstream of the compressor wheel 12, an ejector 20, and a first gas pipe 21, which connects the ejector 20 and the crankcase 18. Furthermore, the device includes a stop valve 28, which operates to permit and block flow of the blow-by gas that has flowed out of the combustion chamber 4 into the crankcase 18 toward the first gas pipe 21. The stop valve 28 is located between the crankcase 18 and the first gas pipe 21. The stop valve 28 permits the flow of the blow-by gas in the crankcase 18 toward the first gas pipe 21 when being opened, and inhibits the flow of the blow-by gas in the crankcase 18 toward the first gas pipe 21 when being closed.

In the above-mentioned blow-by gas recirculation device, when the stop valve 28 is opened, the blow-by gas that has flowed out of the combustion chamber 4 of the internal combustion engine 1 to the crankcase 18 flows into the first gas pipe 21. The ejector 20 also draws in the blow-by gas in the first gas pipe 21, which is connected to the ejector 20, based on the flow of air in the bypass pipe 19. Thus, when the pressure in the section of the intake passage 3 downstream of the compressor wheel 12 becomes higher than the pressure in the section of the intake passage 3 upstream of the compressor wheel 12 through the operation of the turbocharger 10, flow of air from downstream of the compressor wheel 12 toward upstream of the compressor wheel 12 occurs in the bypass pipe 19 based on the pressure difference. When the flow of air occurs in the bypass pipe 19, the blow-by gas that has flowed into the first gas pipe 21 through opening of the stop valve 28 is drawn in by the ejector 20, and flows to the section of the intake passage 3 upstream of the compressor wheel 12 via the bypass pipe 19.

The blow-by gas recirculation device is also provided with a second gas pipe 22, which connects the crankcase 18 to the section of the intake passage 3 downstream of the throttle valve 5. The second gas pipe 22 is provided with a PCV valve 23, which is selectively opened and closed to open and shut the second gas pipe 22. When the wastegate valve 14 is at the fully opened position and the turbocharger 10 is not performing forced induction, the PCV valve 23 is opened such that the blow-by gas that has flowed out of the combustion chamber 4 of the internal combustion engine 1 into the crankcase 18 is recirculated to the intake passage 3 to be processed. When the PCV valve 23 is opened, the blow-by gas flows into the second gas pipe 22 and flows to the section of the intake passage 3 downstream of the throttle valve 5 via the second gas pipe 22 due to the intake negative pressure that is generated in the section of the intake passage 3 downstream of the throttle valve 5.

In this manner, the blow-by gas that has flowed out of the combustion chamber 4 of the internal combustion engine 1 into the crankcase 18 is recirculated to the intake passage 3 by the blow-by gas recirculation device to be processed.

If detachment (escape) of a connection portion of at least one of the bypass pipe 19 and the first gas pipe 21 from a connected component occurs in the blow-by gas recirculation device, the detachment is detected. The structure for detecting the detachment at an early stage will now be described.

The detachment (escape) of the connection portion of at least one of the bypass pipe 19 and the first gas pipe 21 from the connected component includes the following cases (A) to (F).

(A) The section of the bypass pipe 19 between the ejector 20 and the section of the intake passage 3 downstream of the compressor wheel 12 (hereinafter, referred to as an upstream section 19a) is detached from the section of the intake passage 3 downstream of the compressor wheel 12.
(B) The upstream section 19a of the bypass pipe 19 is detached from the ejector 20.
(C) The section of the bypass pipe 19 between the ejector 20 and the section of the intake passage 3 upstream of the compressor wheel 12 (hereinafter, referred to as a downstream section 19b) is detached from the section of the intake passage 3 upstream of the compressor wheel 12.
(D) The downstream section 19b of the bypass pipe 19 is detached from the ejector 20.
(E) The first gas pipe 21 is detached from the ejector 20.
(F) The first gas pipe 21 is detached from the stop valve 28.

If the connection portion of at least one of the bypass pipe 19 and the first gas pipe 21 is detached from the connected component, the blow-by gas is discharged to the atmosphere through the detached portion. To address this problem, the detachment of the connection portion of at least one of the bypass pipe 19 and the first gas pipe 21 from the connected component is desirably detected at an early stage after the occurrence of detachment. If detachment of the connection portion of at least one of the bypass pipe 19 and the first gas pipe 21 from the connected component occurs, since the bypass pipe 19 is connected to the section of the intake passage 3 upstream of the compressor wheel 12, the atmospheric air also flows in from the detached portion to the section of the intake passage 3 upstream of the compressor wheel 12 in addition to the above-described discharge of the blow-by gas to the atmosphere. However, since the section of the intake passage 3 upstream of the compressor wheel 12 is almost equal to the atmospheric pressure, the operation of the internal combustion engine 1 is not likely to be influenced even if the atmospheric air flows into the section of the intake passage 3 upstream of the compressor wheel 12 through the portion where detachment of the connection portion of at least one of the bypass pipe 19 and the first gas pipe 21 from the connected component has occurred. The detachment thus cannot be detected by monitoring the change in the engine operating state that accompanies the detachment of the connection portion of at least one of the bypass pipe 19 and the first gas pipe 21 from the connected component. Furthermore, a sensor may be additionally provided that includes a signal line that is disconnected due to the detachment to detect the detachment. In this case, however, installation of the sensor is troublesome and extra cost is needed for the sensor.

To address this problem, the blow-by gas recirculation device of the present embodiment is configured such that the detachment of the connection portion of at least one of the bypass pipe 19 and the first gas pipe 21 from the connected component occurs simultaneously with detachment of a different pipe located in the vicinity of the internal combustion engine 1. As the above-mentioned different pipe, a pipe the detachment of which has an influence on a monitorable engine operating state is used. In the present embodiment, the above-mentioned situations (A) and (B) are assumed as the detachment of the connection portion of at least one of the bypass pipe 19 and the first gas pipe 21 from the connected component. As the above-mentioned different pipe, the negative pressure pipe 16 is used.

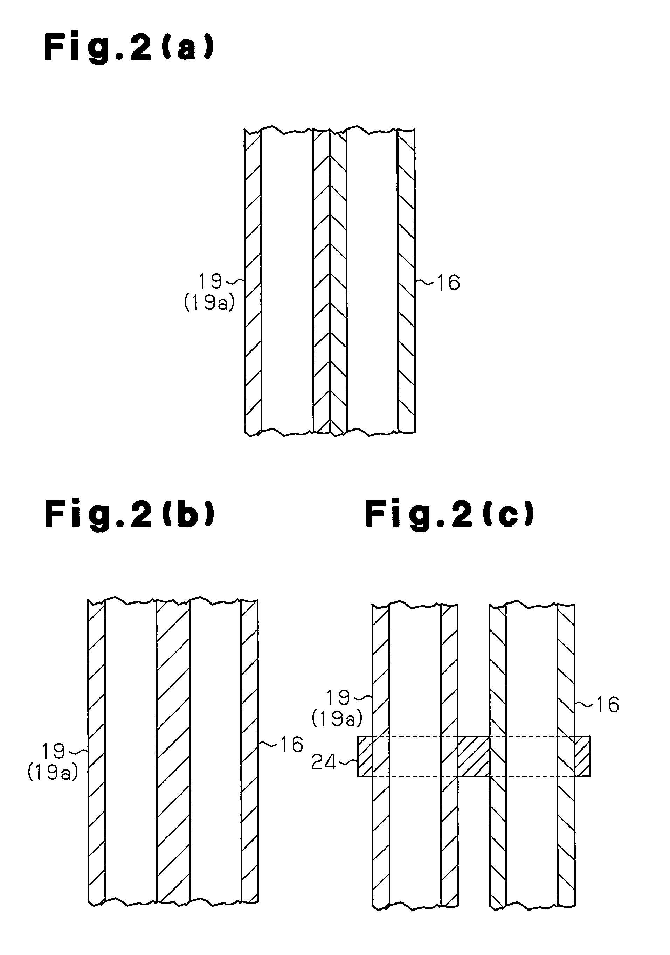

In the blow-by gas recirculation device, detachment of the upstream section 19a of the bypass pipe 19 from the ejector 20, or detachment of the upstream section 19a from the section of the intake passage 3 downstream of the compressor wheel 12 occurs simultaneously with detachment of the negative pressure pipe 16 from the intake passage 3. More specifically, the upstream section 19a and the negative pressure pipe 16 are mechanically coupled to each other such that detachment of the upstream section 19a of the bypass pipe 19 from the ejector 20, or detachment of the upstream section 19a from the section of the intake passage 3 downstream of the compressor wheel 12 occurs simultaneously with detachment of the negative pressure pipe 16 from the intake passage 3. More specifically, the upstream section 19a of the bypass pipe 19 and the negative pressure pipe 16 are respectively formed of metal pipes, and the upstream section 19a and the negative pressure pipe 16 are connected to each other by welding in a state extending in the direction shown in Fig. 2(a).

The upstream section 19a and the negative pressure pipe 16 may be hoses made of flexible material, and the hoses may be integrally formed as shown in Fig. 2(b). Furthermore, as shown in Fig. 2(c), the upstream section 19a and the negative pressure pipe 16 may be separately formed, and may be coupled to each other by a bundling tool 24 in a state where the upstream section 19a and the negative pressure pipe 16 extend in the same direction. The configurations shown in Figs. 2(b) and 2(c) are also the configuration in which detachment of the upstream section 19a of the bypass pipe 19 from the ejector 20, or detachment of the upstream section 19a from the section of the intake passage 3 downstream of the compressor wheel 12 occurs simultaneously with detachment of the negative pressure pipe 16 from the intake passage 3, that is, the configuration in which the upstream section 19a and the negative pressure pipe 16 are mechanically coupled to each other.

The electrical configuration of the blow-by gas recirculation device will now be described with reference to Fig. 1.

The blow-by gas recirculation device includes a control section, which is an electronic control unit 25 in this embodiment. The electronic control unit 25 executes various types of operation control of the internal combustion engine 1. The electronic control unit 25 includes a CPU, which executes various types of computation processes for the above-mentioned control, a ROM, which stores programs and data required for the control, a RAM, which temporarily stores, for example, computation results of the CPU, and input/output ports for receiving and outputting signals from and to an external device.

The following various types of sensors are connected to the input ports of the electronic control unit 25.

A gas pedal position sensor 27, which detects the depression amount of a gas pedal 26 (the degree of depression of the gas pedal) depressed by a driver of a car.

A throttle position sensor 29, which detects the opening degree (throttle opening degree) of the throttle valve 5.

A pressure sensor 30, which detects the pressure in the section of the intake passage 3 downstream of the throttle valve 5.

A crank position sensor 31, which outputs signals corresponding to rotation of the crankshaft 8.

An air-fuel ratio sensor 32, which outputs signals corresponding to the oxygen concentration in the exhaust gas that passes through the exhaust passage 9.

A drive circuit of the fuel injection valve 2, a drive circuit of the throttle valve 5, a drive circuit of the control valve 17, the PCV valve 23, and a drive circuit of the stop valve 28 are connected to the output ports of the electronic control unit 25.

The electronic control unit 25 grasps the engine operating state such as the engine speed and the engine load (the amount of air drawn into the combustion chamber 4 per cycle of the internal combustion engine 1) based on the detection signals received from the various types of sensors. The engine speed is obtained based on the detection signals from the crank position sensor 31. Furthermore, the engine load is calculated from the intake air amount and the engine speed of the internal combustion engine 1 obtained based on the detection signals from the gas pedal position sensor 27, the throttle position sensor 29, and the pressure sensor 30. The electronic control unit 25 outputs command signals to the drive circuits of various types of devices such as the fuel injection valve 2, the throttle valve 5, the control valve 17, the PCV valve 23, and the stop valve 28 based on the engine operating state grasped as described above. In this manner, throttle opening degree control, fuel injection control, and opening and closing control of the control valve 17, the PCV valve 23, and the stop valve 28 of the internal combustion engine 1 are performed by the electronic control unit 25.

Fuel injection amount control executed as one of the fuel injection control of the internal combustion engine 1 is performed by injecting, from the fuel injection valve 2, the amount of fuel corresponding to an injection amount command value Qfin obtained based on the engine operating state. Furthermore, the injection amount command value Qfin is corrected to be increased or decreased based on the detection signal from the air-fuel ratio sensor 32 such that the detection signal from the air-fuel ratio sensor 32 becomes equal to a value when the air-fuel mixture in the combustion chamber 4 is burned at a stoichiometric air-fuel ratio. That is, if the value of the detection signal from the air-fuel ratio sensor 32 is richer than the value obtained when the air-fuel mixture in the combustion chamber 4 is burned at the stoichiometric air-fuel ratio, the injection amount command value Qfin is decreased to reduce the amount of fuel supplied to the combustion chamber 4, so that the air-fuel ratio of the air-fuel mixture in the combustion chamber 4 approaches the stoichiometric air-fuel ratio. If the value of the detection signal from the air-fuel ratio sensor 32 is leaner than the value obtained when the air-fuel mixture in the combustion chamber 4 is burned at the stoichiometric air-fuel ratio, the injection amount command value Qfin is increased to increase the amount of fuel supplied to the combustion chamber 4, so that the air-fuel ratio of the air-fuel mixture in the combustion chamber 4 approaches the stoichiometric air-fuel ratio.

Operation of the blow-by gas recirculation device of the present embodiment will now be described.

In the blow-by gas recirculation device, the negative pressure pipe 16 is located in the vicinity of the upstream section 19a of the bypass pipe 19 as shown in Fig. 2(a). The device is configured such that detachment of the upstream section 19a from the section of the intake passage 3 (Fig. 1) upstream of the compressor wheel 12, or detachment of the upstream section 19a from the ejector 20 occurs simultaneously with detachment of the negative pressure pipe 16 from the intake passage 3. Due to this, if detachment of the upstream section 19a from the section of the intake passage 3 upstream of the compressor wheel 12, or detachment of the upstream section 19a from the ejector 20 occurs, the negative pressure pipe 16 is simultaneously detached from the intake passage 3. Thus, the engine operating state is changed due to the detachment of the negative pressure pipe 16.

More specifically, if the negative pressure pipe 16 is detached from the intake passage 3 as described above, the intake negative pressure generated in the intake passage 3 downstream of the throttle valve 5, in other words, the intake negative pressure for driving the actuator 15, which operates the wastegate valve 14, cannot properly act on the actuator 15 via the negative pressure pipe 16. In this case, even if the intake negative pressure is caused to act on the actuator 15 with the intention to adjust the wastegate valve 14 to a position in the closing direction than the fully opened position (for example, fully closed position) with the control valve 17 opened, the wastegate valve 14 cannot but stay at the fully opened position. Thus, it is impossible to properly perform forced induction of the internal combustion engine 1 by the turbocharger 10. This makes it impossible to control the boost pressure of the internal combustion engine 1, which is increased through operation of the turbocharger 10, to a target value, and the boost pressure becomes lower than the target value.

As described above, a change in the boost pressure of the internal combustion engine 1 (decrease in the boost pressure with respect to the target value) occurs as a change in the engine operating state associated with detachment of the negative pressure pipe 16. Based on the change, detachment of the negative pressure pipe 16 from the intake passage 3, in other words, detachment of the upstream section 19a of the bypass pipe 19 from the intake passage 3 or the ejector 20 is detected. Furthermore, only the pressure sensor 30 for detecting the boost pressure is necessary to detect such detachment of the upstream section 19a from the intake passage 3 or the ejector 20. It is thus unnecessary to provide an additional sensor to detect detachment of the bypass pipe 19.

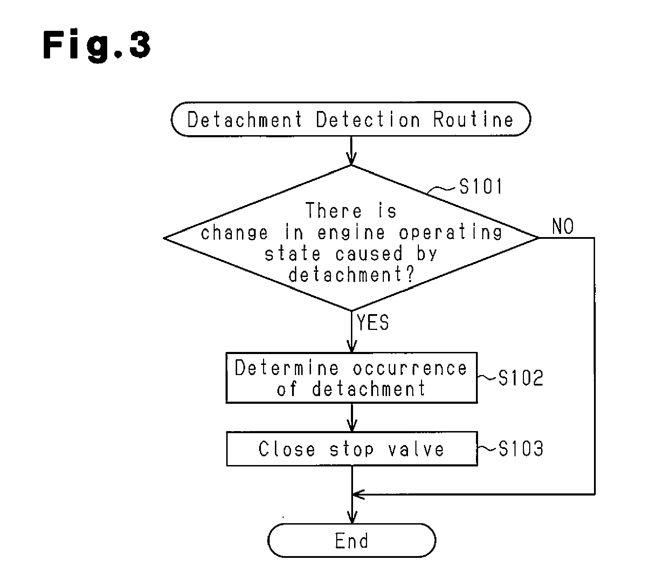

Fig. 3 is a flowchart showing detachment detection routine for detecting detachment of the upstream section 19a of the bypass pipe 19 from the compressor wheel 12 in the intake passage 3 and detachment of the upstream section 19a from the ejector 20, and addressing the detachment. The detachment detection routine is periodically executed by, for example, a time interrupt at every predetermined time period through the electronic control unit 25.

In this routine, it is first determined whether there is a change in the engine operating state caused by detachment of the upstream section 19a from the intake passage 3 or the ejector 20 (S101). More specifically, if the negative pressure pipe 16 is detached from the intake passage 3 due to detachment of the upstream section 19a from the intake passage 3 or the ejector 20, the boost pressure of the internal combustion engine 1 is reduced with respect to the target value as a change in the engine operating state caused by the detachment of the negative pressure pipe 16. Based on the change in the boost pressure, it is determined that the upstream section 19a is detached from the intake passage 3 or the ejector 20 (S102), and the occurrence of detachment is detected.

When the detachment of the upstream section 19a from the intake passage 3 or the ejector 20 is detected, the stop valve 28 is closed as a fail-safe carried out at the occurrence of such detachment (S103). Closing the stop valve 28 as described above inhibits the flow of the blow-by gas that has flowed out of the combustion chamber 4 of the internal combustion engine 1 into the crankcase 18 toward the first gas pipe 21. Thus, when the upstream section 19a is detached from the intake passage 3 or the ejector 20, the blow-by gas is prevented from being discharged to the atmosphere through the detached portion.

The present embodiment as described above has the following advantages.
(1) If the upstream section 19a of the bypass pipe 19 is detached from the intake passage 3 or the ejector 20, the negative pressure pipe 16 is simultaneously detached from the intake passage 3. Thus, the boost pressure of the internal combustion engine 1 is reduced with respect to the target value as a change in the engine operating state associated with the detachment of the negative pressure pipe 16. Since the decrease in the boost pressure with respect to the target value can be monitored based on detection signals from the pressure sensor 30, the detachment of the negative pressure pipe 16 from the intake passage 3, in other words, the detachment of the upstream section 19a of bypass pipe 19 from the intake passage 3 or the ejector 20 is detected based on the decrease in the boost pressure with respect to the target value. Furthermore, it is unnecessary to provide an additional sensor for detecting such detachment of the upstream section 19a of the bypass pipe 19 from the intake passage 3 or the ejector 20.
(2) When detachment of the upstream section 19a from the intake passage 3 or the ejector 20 is detected, the stop valve 28 is closed. This inhibits the flow of the blow-by gas that has flowed out of the combustion chamber 4 of the internal combustion engine 1 into the crankcase 18 toward the first gas pipe 21. Thus, when the upstream section 19a is detached from the intake passage 3 or the ejector 20, the blow-by gas is prevented from being discharged to the atmosphere through the detached portion.

The above described embodiment may be modified as follows.

The configuration may be employed that assumes the above-mentioned situations (C) and (D) as the detachment of the connection portion of at least one of the bypass pipe 19 and the first gas pipe 21 from the connected component. In this case, detachment of the downstream section 19b of the bypass pipe 19 from the ejector 20 or detachment of the downstream section 19b from the section of the intake passage 3 upstream of the compressor wheel 12 occurs simultaneously with detachment of the negative pressure pipe 16 from the intake passage 3. More specifically, the downstream section 19b and the negative pressure pipe 16 may be mechanically coupled to each other such that detachment of the downstream section 19b of the bypass pipe 19 from the ejector 20 or detachment of the downstream section 19b from the section of the intake passage 3 upstream of the compressor wheel 12 occurs simultaneously with detachment of the negative pressure pipe 16 from the intake passage 3. Concretely, the downstream section 19b and the negative pressure pipe 16 may be connected to each other by welding, formed integrally with each other, or connected to each other by a bundling tool.

The configuration may be employed that assumes the above-mentioned situations (E) and (F) as the detachment of the connection portion of at least one of the bypass pipe 19 and the first gas pipe 21 from the connected component. In this case, it may be configured such that detachment of the first gas pipe 21 from the stop valve 28 or detachment of the first gas pipe 21 from the ejector 20 occurs simultaneously with detachment of the negative pressure pipe 16 from the intake passage 3. More specifically, the first gas pipe 21 and the negative pressure pipe 16 may be mechanically coupled to each other such that detachment of the first gas pipe 21 from the stop valve 28 or detachment of the first gas pipe 21 from the ejector 20 occurs simultaneously with detachment of the negative pressure pipe 16 from the intake passage 3. Concretely, the first gas pipe 21 and the negative pressure pipe 16 may be connected to each other by welding, formed integrally with each other, or connected to each other by a bundling tool.

Instead of the negative pressure pipe 16, the second gas pipe 22 may be used as a different pipe that is detached from the intake passage 3 simultaneously with detachment of the connection portion of at least one of the bypass pipe 19 and the first gas pipe 21 from the connected component. The second gas pipe 22 allows the blow-by gas that has flowed out of the combustion chamber 4 of the internal combustion engine 1 into the crankshaft 8 to flow to the section of the intake passage 3 downstream of the throttle valve 5. In the case where the second gas pipe 22 is used as the different pipe also, the configuration of mechanical coupling in the same manner as the above-described embodiment may be employed as the configuration that allows the second gas pipe 22 to be detached from the intake passage 3 simultaneously with detachment of the connection portion of at least one of the bypass pipe 19 and the first gas pipe 21 from the connected component. More specifically, the second gas pipe 22 and one of the bypass pipe 19 and the first gas pipe 21 may be connected to each other by welding, formed integrally, or connected to each other by a bundling tool.

With this configuration, if detachment of the connection portion of at least one of the bypass pipe 19 and the first gas pipe 21 from the connected component occurs, detachment of the second gas pipe 22 from the intake passage 3 occurs simultaneously. In this case, even if the PCV valve 23 is opened, the blow-by gas in the second gas pipe 22 is not drawn into the section of the intake passage 3 downstream of the throttle valve 5, and the atmospheric air is drawn in instead of the blow-by gas. As a result, the air-fuel ratio of the internal combustion engine 1 is changed to a lean state as a change in the engine operating state associated with the detachment of the second gas pipe 22. Based on the change in the air-fuel ratio, the detachment of the second gas pipe 22, in other words, the detachment of the connection portion of at least one of the bypass pipe 19 and the first gas pipe 21 from the connected component is detected. Since the change in the air-fuel ratio of the internal combustion engine 1 is detected based on detection signals from the air-fuel ratio sensor 32 provided in the exhaust passage 9 of the engine 1, it is unnecessary to provide an additional sensor for detecting detachment of the connection portion of at least one of the bypass pipe 19 and the first gas pipe 21 from the connected component.

In a case where the second gas pipe 22 is employed as the different pipe, change in a correction value that is increased or decreased to correct the injection amount command value Qfin based on detection signals from the air-fuel ratio sensor 32 may be used for detecting detachment of the connection portion of at least one of the bypass pipe 19 and the first gas pipe 21 from the connected component (in a direct sense, detachment of the second gas pipe 22 from the intake passage 3).

Instead of using the negative pressure pipe 16 or the second gas pipe 22 as the different pipe, a purge pipe of a fuel vapor treatment device, a water pipe configuring a coolant circuit in the internal combustion engine, or an oil pipe configuring an oil circuit of the internal combustion engine 1 may be employed. Detachment of the purge pipe can be detected based on detection signals from the air-fuel ratio sensor 32, detachment of the water pipe can be detected based on detection signals from a coolant temperature sensor of the internal combustion engine, and detachment of the oil pipe can be detected based on detection signals from a hydraulic sensor of the internal combustion engine.

The stop valve 28 does not necessarily have to be provided.

### DESCRIPTION OF THE REFERENCE NUMERALS

1...internal combustion engine, 2...fuel injection valve, 3...intake passage, 4...combustion chamber, 5...throttle valve, 6...ignition plug, 7...piston, 8...crankshaft, 9...exhaust passage, 10...turbocharger, 11...turbine wheel, 12...compressor wheel, 13...bypass passage, 14...wastegate valve, 15...actuator, 16...negative pressure pipe, 17...control valve, 18...crankcase, 19...bypass pipe, 20...ejector, 21...first gas pipe, 22...second gas pipe, 23...PCV valve, 24...bundling tool, 25...electronic control unit, 26...gas pedal, 27...gas pedal position sensor, 28...stop valve, 29...throttle position sensor, 30...pressure sensor, 31...crank position sensor, 32...air-fuel ratio sensor.

## Claims

1. A blow-by gas recirculation device applied to an internal combustion engine in which a forced-induction device provided in an intake passage performs forced induction, the device comprising:
a gas pipe into which blow-by gas that has flowed out of a combustion chamber of the internal combustion engine flows;
a bypass pipe, which connects a section of the intake passage upstream of the forced-induction device and a section of the intake passage downstream of the forced-induction device to each other; and
an ejector provided in the bypass pipe, wherein the gas pipe is connected to the ejector, and the ejector recirculates the blow-by gas to the intake passage via the bypass pipe by drawing in the blow-by gas in the gas pipe using the flow of air in the bypass pipe, wherein
the blow-by gas recirculation device is configured such that detachment of a connection portion of at least one of the bypass pipe and the gas pipe from a connected component occurs simultaneously with detachment of a different pipe located in the vicinity of the internal combustion engine, and
the different pipe is a pipe that, if detached, would have an influence on a monitorable engine operating state.

2. The blow-gas recirculation device for an internal combustion engine according to claim 1, wherein the device monitors the engine operating state that is influenced by detachment of the different pipe, and detects detachment of the connection portion of at least one of the bypass pipe and the gas pipe from the connected component that has occurred simultaneously with detachment of the different pipe based on a change in the engine operating state.

3. The blow-by gas recirculation device according to claim 2, further comprising a stop valve that operates to permit and block flow of the blow-by gas that has flowed out of the combustion chamber of the internal combustion engine toward the gas pipe, wherein, when detecting detachment of the connection portion of at least one of the bypass pipe and the gas pipe from the connected component that has occurred simultaneously with detachment of the different pipe, the blow-by gas recirculation device inhibits the flow of the blow-by gas toward the gas pipe by closing the stop valve.

4. The blow-by gas recirculation device for an internal combustion engine according to any one of claims 1 to 3, wherein at least one of the bypass pipe and the gas pipe is mechanically coupled to the different pipe.

5. The blow-by gas recirculation device for an internal combustion engine according to any one of claims 1 to 4, wherein at least one of the bypass pipe and the gas pipe is integrally formed with the different pipe.

6. The blow-by gas recirculation device for an internal combustion engine according to any one of claims 1 to 4, wherein at least one of the bypass pipe and the gas pipe is connected to the different pipe by welding or by a bundling tool.

7. The blow-by gas recirculation device for an internal combustion engine according to any one of claims 1 to 6, wherein the different pipe is a negative pressure pipe for causing intake negative pressure of the engine to act on an actuator that is driven by the intake negative pressure to adjust forced-induction pressure of the internal combustion engine generated by the forced-induction device.

8. The blow-by gas recirculation device for an internal combustion engine according to any one of claims 1 to 6, wherein
the gas pipe is a first gas pipe, and a throttle valve is provided in the intake passage, and
the different pipe is a second gas pipe that allows the blow-by gas that has flowed out of the combustion chamber to flow to the section of the intake passage downstream of the throttle valve.

9. The blow-by gas recirculation device for an internal combustion engine according to any one of claims 1 to 8, wherein detachment of the connection portion of at least one of the bypass pipe and the gas pipe from the connected component is detachment of the bypass pipe from the intake passage, and the detachment occurs simultaneously with detachment of the different pipe.
